# EUROPEAN PATENT SPECIFICATION

(11) **EP 1 518 062 B1**
(45) Date of publication and mention of the grant of the patent: **17.02.2010**
(21) Application number: 03740860.6
(22) Date of filing: 25.06.2003
(51) Int. Cl.: F16G 5/16

(54) **PULLING V-BELT**
ZUGKEILRIEMEN
COURROIE EN V DE TRACTION

(30) Priority: 25.06.2002 EP 02077769
(43) Date of publication of application: 30.03.2005
(73) Proprietor: Van Doorne's Transmissie B.V., 5026 RA Tilburg (NL)
(72) Inventor: SMEETS, Paulus, Maria, NL-5046 JC Tilburg (NL); LUNSHOF, Jan, Halbe, NL-2498 Den Haag (NL)
(74) Representative: Hatzmann, Martin
(86) International application number: PCT/IB2003/002458
(87) International publication number: WO 2004/001255

(56) References cited:
- EP-A- 0 826 901
- DE-C- 850 539
- FR-A- 792 144
- FR-A- 1 097 864
- FR-A- 2 515 296
- GB-A- 196 465
- GB-A- 574 189
- GB-A- 2 030 263
- GB-A- 2 088 018
- US-A- 4 915 677
- PATENT ABSTRACTS OF JAPAN vol. 010, no. 171 (M-489), 17 June 1986 (1986-06-17) -& JP 61 021446 A (NISSAN JIDOSHA KK), 30 January 1986 (1986-01-30)

## Description

The present invention relates to drive belts.

Such belts are generally known in the art, either for application in fixed ratio, or for variable ratio transmissions. Such so called V-belts, simply called "rubber belts", have since long essentially been produced with a body of a natural or synthetic rubber material, and have a reinforcing tensile means in the forum of a layer of a plurality of tensile elements such as cords, e.g. produced in a synthetic fibre. Commonly the cords are incorporated in one layer, with the cords lying side by side. The tensile means is embedded in a rubber material. Within the layer, sometimes denoted cushion layer, commonly a specific type of rubber is applied for optimising the bounding between rubber and tensile element.

One limitation of this known type of belt is that the amount of transmissible power from one pulley to another, is limited by the amount of power that can be transferred from the rubber to the tensile means. Thus, the force transferable from one pulley to the other is limited by the maximum load of the connection between the rubber and the cords within the belt.

Another and major drawback of the known V-beft concerns the smallest running diameter that can be attained at a virtually infinite time of operation of the belt. This phenomenon is especially relevant at V-belts for application in variable ratio transmissions. In these applications it is important to have a sufficiently lateral bearing or contacting surface for contacting the sheaves of a pulley, so as to guarantee a proper and smooth shifting and running feature of the belt. However, this requirement increases the radial height of the conventional V-belt and therewith the bending stress in the belt. Bending stress occurs in a high extend at the radial outer side of a belt. The bending stress also affects the connection between the body and the tensile elements, which connection plays an important role because of a requirement to have a sufficiently large surface area on the tensile elements for bonding, i.e. adhering these to the body material of the belt.

Many commercial applications still require a low cost solution with an even smaller smallest running diameter feature of the belt, e.g. at application in the drive line of scooters, or under the bonnet of a personal vehicle where space is scarce.

A high power solution known in the art of pull belts is provided by EP-A-0 826 901. The design of this belt features transverse elements, having a fixed position relative to a tensile means, denoted load carrier. The carrier consists of two endless parts, placed in laterally extending slots of the elements. The carriers have an elastically deformable body of noticeable height, in which a centred layer of strings is incorporated. The strings and the manner of incorporation correspond to what is known from conventional V-belts, and have the associated draw back of limited transfer of force per unity of width. The transverse elements have cords so as to achieve both a desired amount of axial stiffness and a required amount of friction with sheaves. After the driving force has been transmitted from the sheaves to the transverse elements, the latter carry this force over to the tensile bodies by a different upper and lower profiling therein. Subsequently the force is conducted from the body of the load carrier to the layer of cords in the conventional manner.

Yet another solution is provided by US 4,915,677. The publication discloses a pull belt with one or a plurality of a so-called tension resistant members, embodied by a layer of cables. This known pull belt is preferably provided with metal elements which are opened-to the radial outer side by a recess. The bottom of the recess is profiled for receiving a plurality of cables disposed in a layer at a level in the upper, i.e. radial outer half of the elements. For improvement of the force distribution, a filler element is present, filling the recess and aiding the bonding between the cables and the elements. The bonding is enhanced by an elastomeric mass joining the transverse elements and the tension resistant member. This design suffers from the drawback of the conventional V-belt, in that the transmittable force is limited by the force transmittable from the elastomeric body to the cables incorporated therein. Manufacture is also complicated by the requirement of precisely receiving the cables in the relevant recesses between the element and the filler. A disadvantage exists in that the pulley contacting limbs deflect inwardly under high pressure. It was suggested to fill up the recess by a filler plate, preferably to be welded between and against said limbs. This solution complicates the design and raises production costs.

French patent publication FR-A-2515296 in accordance with the preamble of claim 1 discloses a belt having transverse elements of a treated metal material and a ribbon composed of an armature part of a either metal or metalloid fibres, cabled or not, or of a netting or the like, which armature part is enrobed by a semi rigid material such as polyamide. The thus composed ribbon is included in the radial centre of the belt and extends substantially over the local width of a transverse element. The ribbon is provided with radial extensions or relief elements which are molded simultaneously with the coating of the armature. The extensions or intermediate bodies are situated between the transverse elements so as to be compressed thereby. The ribbon is designed to have openings over about 30% of its occupied surface, so as to achieve "an intimate mingling of the polyamide and the armature". The armament of this known belt design is relatively thick. A further drawback of the design is exists in that the ribbon is designed integrally with the intermediate bodies between the transverse elements, which limits manufacturing freedom of the belt. Also, it requires the transverse elements to be open at one side, which limits a desired stiffness of the elements in that open elements disadvantageously tend to allow the limbs to spread.

The present invention thus seeks to improve the pull belt type for variable transmissions in a manner that a relatively small smallest running diameter can be attained at application in a transmission, in particular a continuous variable transmission, without undue sacrifice to durability of the belt, nor to force transmittable by the belt, and without undue complication of design and manufacture. In particular the invention aims to provide a design technically and economically applicable and without undue manufacturing efforts, more in particular in the area of relatively small power transmissions like at the conventional rubber V-belt designs.

According to the invention, such is attained by the characterising portion of claim 1. The ultimately thin tensile element as featured in the design according to the invention effects a very low bending stress in the tensile element, thus enables a relatively long life time or very small smallest running diameter at equal life time. This feature is made possible by extending the tensile element over a broadest possible width, i.e. possibly as broad as the belt or any element incorporated therein, however without contacting the sheaves of the pulley. According to the invention, the width is from 0.5 to 0,9 times the width of the element at the effective running diameter of the belt. The tensile element is preferably located central to the radial height of the belt. By this measure, the tensile stress within the tensile means is reduced to a minimum, specifically since it is combined with the feature of being a thin bladed means, i.e. having radial thickness of minimal amount.

The new belt is produced suitable for a continuous variable transmission by the provision of transverse means having a centre opening through which the tensile means is passed, and with an elastically reformable material located longitudinally in between the transverse means, and having an adhesive connection with a radial surface of the tensile means.

According to the invention elasticity and stiffness requirements of the different subcomponents are split up in such a way that they are optimal for the requirement of that component. This leads to a tensile belt that is suitable for very small running radii and which has minimal internal losses leading to a high efficiency belt and low operating temperatures, which is specially important for belts that are partially or completely composed of polymers and/or elastomers.

In the current belt, transverse elements that are stiff enough to prevent deformation of the belt between the pulleys, reducing internal friction losses and forming a beam to resist the required clamping force of the pulley sheaves. These elements may favourably relatively easily be provided with a relatively high resistance to wear. The belt further includes spacing means, i.e. intermediate bodies of an elastic material with negligibly modules of elasticity to eliminate bending stresses in the belt and with a good bonding performance with the radial surface of e.g. a metal strap like tensile means. Thus a good transport of driving force from the tensile element to the transverse elements or vice versa is made possible. This spacing means is in this arrangement compression loaded by the force transfer between tensile element and transverse element and vice versa, preventing peel of the bonding layer between spacing means and tensile element.

The invention will now be elucidated further according to a drawing in which:
FIGURE 1A to 1C relate to conventional rubber V-belts;
FIGURE 2 is a perspective view of an embodiment of the V-belt according to the invention;
FIGURE 3 is an illustration of different techniques for realising an endless tensile means within the belt;
Figure 4 illustrates a preferred shape of the transverse elements;
FIGURE 5 illustrates a common manner of operating a conventional rubber V-shaped belt in a continuously variable transmission;
FIGURE 6 illustrates the possible reduction in dimension of a transmission or variator when the belt according to the invention is applied instead of a conventional belt.

The following description departs from the overall shapes and elements of a V-belt and of the associated and mentioned manufacturing processes as commonly known per se. The invention is primarily found in the new design of the belt. Secondarily the order and manner of assembling the separate components in the belt according to the invention are mentioned.

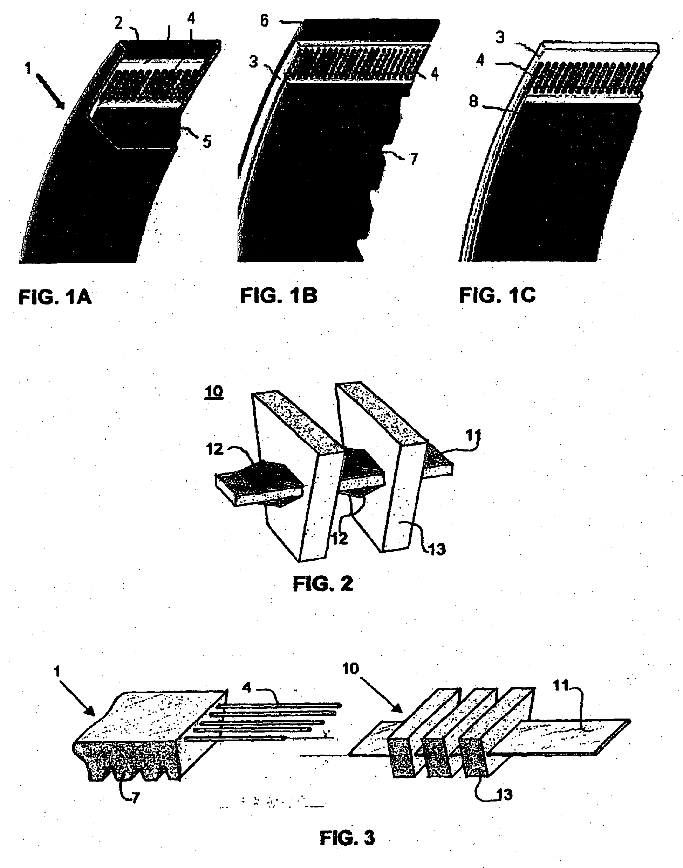

In figure 1, three conventional rubber belt types are represented, a first one suited for transmissions having a fixed transmission ration. A second one typically adapted for variable ratio transmissions, and a third one typically adapted for uses with small running diameters, however, only suitable for a fixed ratio transmission.

In figure 1A the conventional rubber V-belt 1 for fixed ratio transmission is shown with an outer coating 2 all around the belt 1. It has a rubber body 5 of soft elastic nature, and a thin outer coating of a relatively hard elastic nature, however providing resistance to wear. Embedded in an embedding layer 3 of material specifically suitable for connecting to a tensile means 4. The tensile means 4 consists of a layer of relatively thin rope, e.g. a Kevlar material, wound equally distributed over the width of the belt. The radial thick body 5 prevents the belt from adopting small running diameters, however promotes a stable running of the belt in the V-groove between the sheaves of a pulley.

The belt according to figure 1B is modified in that no surrounding is outer body is provided, in that the body is of a stiffer rubber type and is at the radial inner side provided with transverse grooves, commonly distributed at even distances of between 0.8 and 1.5 cm. At the radial outer face, a reinforced layer of relatively stiff material 6 is provided, supporting the stiffness of the belt in axial direction, thereby enhancing the efficiency of the belt.

The belt according to figure 1C is provided with V-shaped grooves 8 extending in longitudinal direction, thereby increasing, i.e. regaining contacting area with correspondingly grooved fixed ratio pulleys of a small running diameters. No outer support layer 6 is required since the belt is not loaded with axial thrust originating from sheaves of a pulley.

The invention shows a separation in function of a transverse clamping means 13 and a tensile loadable body 11, in casu embodied by a flat strip of a tensile loadable material, preferably spring type steel or a synthetic tape of a synthetic uni directional (UD-) material. A transverse element 13 is mechanically coupled to the tensile body 11. The transverse element may be composed of metal but is preferably entirely composed of a synthetic material.

The strip 11 forming the tensile means 11 according to the invention, composed of metal like spring steel or of unidirectional synthetic tape ("UD-tape"), is of a thickness considerably smaller than that of the cords 4 applied in conventional tensile bodies. The measure in accordance with the invention effects a considerable reduction of bending stress within the tensile body 11, implying a longer life time when a belt 10 with such tensile element 11 is run at a corresponding running radius, or an equal life time at a considerably smaller running radius.

The immense reduction in thickness of the tensile element 11 is in accordance with the invention made possible through the fact that the tensile element 11. is produced strip like, i.e. entirely flat. By this feature, compared to conventional layers of cord 4, the required small amount of space between the cords 4 is entirely occupied in width wise, i.e. lateral and axial direction. Very importantly, by this design of the tensile element 11, very high contacting pressures between tensile body 11 may be realised since a danger of the cords 4 cutting through the body of the transverse elements 13 or of an additional layer within the tensile body is strongly if not entirely taken away. In the present design, the transverse element 13 and the tensile body 11 mutually engage for driving action mechanically

Another characterising feature of a design in accordance with the invention, is that the tensile body 11 is located centred in radial direction relative to the radial height of the contacting faces 14 of the transverse elements 13, thus further reducing the tensile load and stress on the tensile element 11 in the belt 10. In the present embodiment where the tensile body 11 is solely formed by a tensile strip 11, and where the thickness of the strip 11 may virtually be neglected, this implies that the effective point of contact or location of the friction force of a contacting face 14 is located virtually centred relative to the radial height of the contacting faces 14 of the element 13.

The tensile means 11 may also be produced as a tensile strip 11 coated with an elastically deformable material 12 such as vulcanised rubber or a synthetic rubber material. The presence of the elastic material 12 in this context assists in levelling local pressure peaks, thus enhances lifetime of the belt.

In the embodiment according to figure 2 advantage is taken of the circumstance that in accordance with the invention it is relied on the shear force feature of the elastically deformable material of the intermediate body 12, rather than on the tensile force coefficient of this material, implying that a relatively high tensile force can be carried over in the tensile means 11.

Figure 2 schematically depicts the structure of an embodiment according to the invention in which connection between the tensile element 11 and the transverse element 13 is realised through an elastically deformable material 12, firmly bonded, i.e. adhesively connected to the strip element 11, e.g. glued or otherwise bonded, with the material preferably extending over the width of the strip 11. In the embodiment according to figure 2, first the elements 13 are shifted over the tensile element 11 after which the elastic material 12 is applied. The thus created tensile body 11, 12 consists of a mirrored profiling at each of both radial inner and outer surface face of the tensile means 11. The elastic material 12 is at least present longitudinally in between two adjacent transverse elements 13 and is firmly connected to the strip element 11, i.e. it has an adhesive bonding, either or not enhanced by mechanical or chemical treatment of the radial surface area of the tensile means 11. It has a very high resistance against shear and peeling, alternatively denoted a high coefficient of adhesion. Preferably vulcanised rubber is used for this purpose, however, also a combination of dedicated surface treatment and a subsequent application of synthetic rubber showed useful results.

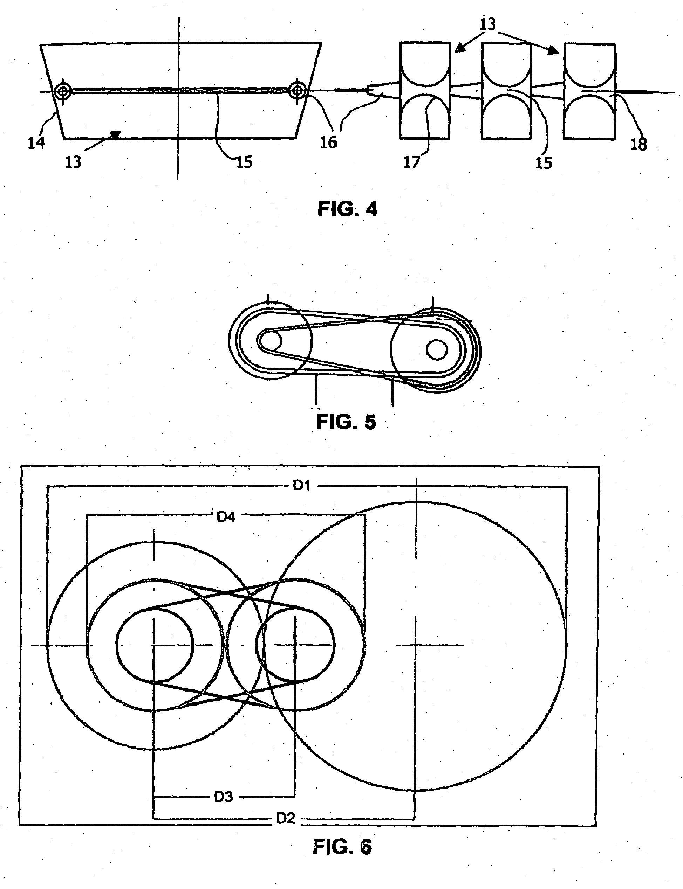

The transverse element 13 in this embodiment extends two sided over the tensile body 11, thus shows a centralised slotted opening 15 fitting a cross section of the tensile body 11. In accordance with the invention, the elements 13 may be individually (injection) moulded and subsequently be tacked or stringed to the tensile strip 11, brought into mutually correct position by means of a mail. In case of moulded elements 13, a distance boss 16 is provided to the elements 13. Subsequently the elastic material 12 is provided by injection or transfere moulding, intermediate to the transverse elements 13. Application of the intermediate elastic material 12 in the embodiment according to figure 4 can e.g. be done by one or more injection nozzles directed to the surface of the tensile strip 11. At each embodiment, the elastic material 12 is provided over a thickness of more than 1 mm above the strip surface and preferably at a maximum of half or less than a quarter of the total radial height of the contact face 14 of a transverse element. However, the gap between transverse elements 13 may without undue influence to the basic function of the belt also be filled entirely.

Preferably the central opening 15 in the transverse element 13 shows a rounding 17 or a chamfer 17 of the edges as seen in radial and - belt wise - longitudinal cross section. In this manner the contact between the element 13 and the elastic material 12 is optimised. It is realised that any damaging contact between element 13 and tensile strip 11, likely to be caused by a high surface pressure due to sharp edges at the element 13 is minimised. The latter shape of the element slot 15 according to the invention, at driving activation of a transverse element 13 by the sheaves of a pulley, urges the element 13 on to the intermediate material 12. By the chamfer 17 or otherwise manner of rounding, a funnel-like opening 18 is created at the central opening 15 of the element. The elastic material between two transverse elements 13, by the funnel shape 18, tends to become gradually compressed towards the surface of the tensile strip 11 under the influence of any longitudinal driving force of a transverse element 13, thus causing the internal friction capacity of the elastic material 12 and the friction with the strip surface to be increased, optimising the transfer of driving power from the transverse element 13 to the tensile strip.

Figure 4 shows an example of such above described funnelled openings 18, in casu with a rounded opening. Due to subsequent injection of the intermediate material 12, the latter adopts the shape created in the opening 18 of the element 13.

The transverse elements 13 are produced of a very stiff, i.e. non-compressible synthetic material, preferably fibre reinforced, having a high temperature resistance, i.e. preferably over 100 or even up to 150 degrees Celsius, and with a reasonable coefficient of friction in combination with metal sheaves. One such material is high tech thermosets like phenol based materials or high tech engineering plastics with or without fibre filling may equally be applied however. Although a metal transverse element 13 could be used, the invention applies a synthetic material so as to more easily provide the elements 13 with the desired shape details, and so as to enhance manufacturing of the elements and equally to enhance assembly of the belt 10 according to the invention.

Figure 5 shows a further advantage of the present invention. which is most favourably used when the current belt 10 is applied as a replacement belt for a conventional rubber belt, i.e. in a variator of otherwise conventional dimension. Since the tensile means 11 is located radially centred, the driving force of the transmission is effectively located at radial lower point of up to 5 mm. This phenomenon is of a relative high significance at the smallest diameter, compared to the situation at the other driving wheel where the largest running diameter occurs at such instance. Thus in the initial stage of transmission, an improved so called launch performance, e.g. at scooters is achieved.

Advantages of the belt 10 according to the invention include the reduced smallest possible running diameter, and the small, material saving transmission case consequently required, an increased efficiency of the belt due to reduction of internal losses otherwise caused by compression, both in longitudinal and in axial direction, and an increased life time of the belt due to the use of reinforced, non-compressible synthetic material in the transverse elements, and to the reduced tensile stress in the tensile element, due to it's strongly reduced thickness. Moreover, the belt according to the invention may realise a significantly increased transfer of power due to the lower position of the tensile element as compared to conventional rubber V-belts.

Figure 5 and 6 together provide an indication of the effects attainable with a belt 10 according to the present invention. In Figure 6, schematically part of transmission line of a scooter is shown with the contour of a pulley sheave to the front side at the left hand side of the figure and one to the rear side at the right hand side in the figure. At the front side the smallest possible running diameter is utilised since the take off or launching of a vehicle is only short lived. At the rear wheel however, the smallest running diameter, occurring in overdrive (OD) situation occurs most of the operation time of the vehicle. So as to enhance life time of the belt, the smallest running diameter is commonly limited to a diameter about twice the smallest diameter at the front pulley. With a belt 10 designed in accordance with the invention, such limitation may be omitted. Moreover the smallest possible running diameter is even further reduced, so that for achieving a comparable transmission ratio, the diameter of the pulleys may be reduced.

Figure 6 shows that the overall length of a transmission drive line may be significantly reduced. This may amount from about 75% of the smallest possible distance D2 between the axes of two conventional pulleys up to almost 50% of the currently applied space D1 between the pulleys of nowadays scooters. Thus the invention also relates to a scooter or alike vehicle, having a variator, with a belt 10 according to the invention, and integrated with the engine, i.e. incorporated within the dimensions thereof, and having a fixed ratio transmission, e.g. by a belt between the variator and the rear wheel.

When a belt 10 according to the invention is merely applied as a replacement belt, .i.e. with a conventional dimensioning of the variator, still a significant advantage exists in a structurally higher potential of transferring power due to the low position of the tensile element.11. It may a.o. be used to enhance the driving characteristic of such vehicle in the LOW driving mode. For instance, the coupling may be tuned to close somewhat earlier, so that a driving force may already be transferred at lower engine speed, due to the enhanced torque transmission capacity in combination with a belt 10 according to the invention.

## Claims

1. Drive belt (10) for rotational transfer of a force between two or more drive wheels, provided with a tensile means (11) for transferring the force to be transferred between said drive wheels, in which the tensile means is incorporated in the belt, which belt is provided with transverse elements (13), each disposed at radial sides of said tensile means (11), effecting a contact between the belt (10) and a drive wheel, which transverse elements (13) are each provided with a slotted opening for receiving the tensile means (11), with an intermediate body (12) of elastically deformable material disposed to at least one radial side of the tensile means (11), so as to be able to be compressed between the tensile means (11) and the transverse elements (13) effecting a transfer of driving power from the transverse elements (13) to the tensile means (11) and vice versa, said tensile means extending over a width being from 0.5 to 0.9 times the width of the element at the effective running , diameter of the belt, **characterised in that** the tensile means comprises a flat strip or sheet like tensile means of minimal thickness, comprising one of a unidirectional (UD) and a metal sheet -material, in which the intermediate body (12) has an adhesive connection with a such radial face of the tensile means (11), and in which the slotted openings of the transverse elements (13) fit with a cross section of the tensile means (11).

2. Belt according to claim 1, **characterised in that** the tensile means comprises an elastically deformable, rubber like material, coated on to the tensile means (11), such that a small layer of material is located in a contact between the tensile means (11) and a transverse element (13).

3. Belt according to any of the preceding claims, **characterised in that** the width of the a transverse element (13) slightly extends beyond the tensile means (11), and that the intermediate body (12) is provided over at least a substantial part of the width of the tensile means (11).

4. Belt according to any of the preceding claims, **characterised in that** the elastically deformable material (12) of the intermediate body (12) has an elasticity modulus more than 6 times lower than that of the transverse elements (13).

5. Belt according to any of the preceding claims, **characterised in that** the transverse element is composed of one of thermoplastic or a thermoset engineering plastics.

6. Belt according to any of the preceding claims, **characterised in that** an opening (15) in the transverse element (13) for receiving the tensile means (11), comprises a funnel like shaped entry.

7. Belt according to any of the preceding claims, **characterised in that** the transverse element (13) comprises distance bosses (16).

8. Belt according to any of the preceding claims, **characterised in that** the transverse elements entirely surround the tensile means.

## Patentansprüche

1. Antriebsriemen (10) zur drehenden Übertragung einer Kraft zwischen zwei oder mehr Antriebsrädern, mit einer Zugvorrichtung (11) zur Übertragung der zu übertragenden Kraft zwischen den Antriebsrädern, wobei die Zugvorrichtung in den Riemen einbezogen ist, wobei der Riemen mit Querelementen (13) versehen ist, die jeweils an Radialseiten der Zugvorrichtung (11) angeordnet sind und einen Kontakt zwischen dem Riemen (10) und dem Antriebsrad bewirken, wobei die Querelemente (13) jeweils mit einer geschlitzten Öffnung zur Aufnahme der Zugvorrichtung (11) versehen sind, wobei an mindestens einer Radialseite der Zugvorrichtung (11) ein Zwischenkörper (12) aus elastisch verformbaren Material derart angeordnet ist, dass er zwischen der Zugvorrichtung (11) und den Querelementen (13) zusammendrückbar ist, wobei er eine Übertragung von Antriebskraft von den Querelementen (13) zu der Zugvorrichtung (11) und umgekehrt bewirkt, wobei sich die Zugvorrichtung über eine Breite erstreckt, die das 0,5- bis 0,9fache der Breite des Elements am effektiven Laufdurchmesser des Riemens beträgt,
**dadurch gekennzeichnet, dass** die Zugvorrichtung eine flache streifen- oder bahnartige Zugvorrichtung minimaler Dicke ist, die ein unidirektionales (UD) oder Metallblechmaterial aufweist, wobei der Zwischenkörper (12) sich in Haftverbindung mit dieser Radialfläche der Zugvorrichtung befindet und wobei die geschlitzten Öffnungen der Querelemente (13) einem Querschnitt der Zugvorrichtung (11) angepasst sind.

2. Riemen nach Anspruch 1, **dadurch gekennzeichnet, dass** die Zugvorrichtung ein elastisch verformbares, gummiartiges Material aufweist, mit dem die Zugvorrichtung (11) derart beschichtet ist, dass eine kleine Materialschicht in Kontakt zwischen der Zugvorrichtung (11) und dem Querelement (13) angeordnet ist.

3. Riemen nach einem der vorhergehenden Ansprüche, **dadurch gekennzeichnet, dass** sich die Breite des Querelements (13) etwas über die Zugvorrichtung (11) hinaus erstreckt, und dass der Zwischenkörper (12) mindestens über einem wesentlichen Teil der Breite der Zugvorrichtung (11) angeordnet ist.

4. Riemen nach einem der vorhergehenden Ansprüche, **dadurch gekennzeichnet, dass** das elastisch verformbare Material (12) des Zwischenkörpers (12) einen Elastizitätsmodul hat, der um mehr als das 6-fache niedriger ist als derjenige der Querelemente (13).

5. Riemen nach einem der vorhergehenden Ansprüche, **dadurch gekennzeichnet, dass** das Querelement aus einem thermoplastischen oder wärmehärtbaren technischen Plastik gebildet ist.

6. Riemen nach einem der vorhergehenden Ansprüche, **dadurch gekennzeichnet, dass** eine in dem Querelement (13) ausgebildete Öffnung (15) zur Aufnahme der Zugvorrichtung (11) einen trichterartigen Eintrittsbereich aufweist.

7. Riemen nach einem der vorhergehenden Ansprüche, **dadurch gekennzeichnet, dass** das Querelement (13) Abstandsvorsprünge (16) aufweist.

8. Riemen nach einem der vorhergehenden Ansprüche, **dadurch gekennzeichnet, dass** die Querelemente die Zugvorrichtung vollständig umgeben,

## Revendications

1. Courroie d'entraînement (10) pour le transfert rotatif d'une force entre deux roues d'entraînement ou plus, dotée de moyens de traction (11) pour transférer la force à transférer entre lesdites roues d'entraînement, dans laquelle les moyens de traction sont incorporés dans la courroie, laquelle courroie est dotée d'éléments transversaux (13), chacun disposé au niveau des cotés radiaux desdits moyens de traction (11), effectuant un contact entre la courroie (10) et une roue d'entraînement, lesquels éléments transversaux (11) sont chacun dotés d'une ouverture fendue pour recevoir les moyens de traction (11), avec un corps intermédiaire (12) réalisé avec un matériau élastiquement déformable disposé sur au moins un côté radial des moyens de traction (11), afin de pouvoir être comprimé entre les moyens de traction (11) et les éléments transversaux (13) effectuant un transfert de puissance d'entraînement des éléments transversaux (13) aux moyens de traction (11) et vice versa, lesdits moyens de traction s'étendant sur une largeur qui représente 0,5 à 0,9 fois la largeur de l'élément au diamètre d'extension effectif de la courroie, **caractérisée en ce que** les moyens de traction comprennent une bande plate ou moyens de traction en forme de feuille d'une épaisseur minimum, comprenant l'un parmi un matériau unidirectionnel (UD) et un matériau en feuille métallique, dans laquelle le corps intermédiaire (12) a un raccordement adhésif avec une telle face radiale des moyens de traction (11), et dans laquelle les ouvertures fendues des éléments transversaux (13) s'adaptent avec une section transversale des moyens de traction (11).

2. Courroie selon la revendication 1, **caractérisée en ce que** les moyens de traction comprennent un matériau de type caoutchouc élastiquement déformable, appliqué sur les moyens de traction (11), de sorte qu'une petite couche de matériau est positionnée en contact entre les moyens de traction (11) et un élément transversal (13).

3. Courroie selon l'une quelconque des revendications précédentes, **caractérisée en ce que** la largeur de l'élément transversal (13) s'étend légèrement au-delà des moyens de traction (11) et **en ce que** le corps intermédiaire (12) est prévu sur au moins une partie sensible de la largeur des moyens de traction (11).

4. Courroie selon l'une quelconque des revendications précédentes, **caractérisée en ce que** le matériau élastiquement déformable du corps intermédiaire (12) a un module d'élasticité plus de six fois inférieur à celui des éléments transversaux (13).

5. Courroie selon l'une quelconque des revendications précédentes, **caractérisée en ce que** l'élément transversal est composé de l'un parmi un thermoplastique ou un plastique industriel thermodurcissable.

6. Courroie selon l'une quelconque des revendications précédentes, **caractérisée en ce qu'**une ouverture (15) dans l'élément transversal (13) pour recevoir les moyens de traction (11), comprend une entrée en forme d'entonnoir.

7. Courroie selon l'une quelconque des revendications principales, **caractérisée en ce que** l'élément transversal (13) comprend des bosses d'écartement (16).

8. Courroie selon l'une quelconque des revendications précédentes, **caractérisée en ce que** les éléments transversaux entourent complètement les moyens de traction.
